# EUROPEAN PATENT APPLICATION

(11) **EP 3 693 277 A1**
(43) Date of publication of application: **12.08.2020**
(21) Application number: 19210917.1
(22) Date of filing: 22.11.2019
(51) Int. Cl.: B64D 13/06

(54) **ENVIRONMENTAL CONTROL SYSTEMS AND METHODS OF CONTROLLING AIR FLOW THROUGH ENVIRONMENTAL CONTROL SYSTEMS**

(30) Priority: 08.02.2019 US 201916271482
(71) Applicant: Hamilton Sundstrand Corporation, Charlotte, NC 28217-4578 (US)
(72) Inventor: VIGNALI, Mark, Northfield, CT Connecticut 06778 (US); ERNST, Jeffrey, Wethersfield, CT Connecticut 06109 (US)
(74) Representative: Dehns

(57) **Abstract**

An environmental control system (100) includes a first air flow conduit (102) and a second air flow conduit (104). A turbine (108) is in fluid communication with the first air flow conduit and a compressor (110) is in fluid communication with the second air flow conduit. The compressor is operatively associated with the turbine. A flow control valve is arranged along the first air flow conduit to control a second air flow in the second air flow conduit (104) according to a first air flow in the first air flow conduit (102). Aircraft and methods of controlling flow through environmental control systems are also described.

## Description

### BACKGROUND

The present disclosure relates to environmental control systems, and more particularly to control of air flow through environmental control systems.

Aircraft commonly employ aircraft cabin pressurization systems to supply air for the cabin air conditioning system. The aircraft cabin pressurization system generally uses bleed air from the engine compressor, which is routed through a heat exchanger and a compressor prior to provision to the aircraft cabin. This allows the aircraft cabin to be maintained at desirable conditions irrespective of the flight condition of the aircraft. The amount of bleed air from the engine compressor is typically controlled to limit the efficiency loss to the engine associated with the bleed air extracted from the compressor.

Such systems and methods have generally been considered suitable for their intended purpose. However, there remains a need for improved environmental control systems, aircraft, and methods of controlling air flow through environmental control systems, such as environmental control systems having combined air flows. The present disclosure provides a solution to this need.

### BRIEF DESCRIPTION

An environmental control system (ECS) is provided. The ECS includes a first air flow conduit and a second air flow conduit. A turbine is in fluid communication with the first air flow conduit and a compressor is in fluid communication with the second air flow conduit. The compressor is operatively associated with the turbine. A flow control valve is arranged along the first air flow conduit to control a second air flow in the second air flow conduit according to a first air flow in the first air flow conduit.

In addition to one or more of the features described above, or as an alternative, further embodiments may include wherein the second air flow conduit is connected to an ambient air intake carried by an aircraft.

In addition to one or more of the features described above, or as an alternative, further embodiments may include wherein the first air flow conduit is connected to bleed valve of a gas turbine engine compressor section.

In addition to one or more of the features described above, or as an alternative, further embodiments may include wherein the compressor has a compressor inlet and a compressor outlet, wherein the compressor inlet is connected to the second air flow conduit.

In addition to one or more of the features described above, or as an alternative, further embodiments may include wherein the turbine has a turbine inlet and a turbine outlet, wherein the turbine inlet is connected to the flow control valve.

In addition to one or more of the features described above, or as an alternative, further embodiments may include a union connecting the second air flow conduit to the first air flow conduit.

In addition to one or more of the features described above, or as an alternative, further embodiments may include a shaft, a gear, a belt or a chain operatively connecting the turbine to the compressor.

In addition to one or more of the features described above, or as an alternative, further embodiments may include an enclosure connected to the environmental control system, wherein the enclosure comprises an aircraft cabin.

In addition to one or more of the features described above, or as an alternative, further embodiments may include one or more flow sensor arranged to provide a combined flow measurement of total flow from the first air flow conduit and the second air flow conduit.

In addition to one or more of the features described above, or as an alternative, further embodiments may include a single control loop and not more than one single control loop operatively connected to the flow control valve.

In addition to one or more of the features described above, or as an alternative, further embodiments may include a proportional-integral control loop operatively connected to the flow control valve.

In addition to one or more of the features described above, or as an alternative, further embodiments may include a controller operatively connected to the flow control valve and configured to (a) receive a target total flow value; (b) receive a combined flow measurement of both the first air flow and the second air flow; (c) compare the combined flow measurement to the target total flow value; and (d) change the second air flow and the first air flow based on the comparison of the combined air flow air flow to the target total flow value.

In addition to one or more of the features described above, or as an alternative, further embodiments may include wherein the controller is configured to increase the first air flow and the second air flow when the combined flow measurement is below the target total flow value.

In addition to one or more of the features described above, or as an alternative, further embodiments may include wherein the controller is configured to decrease the second air flow and the first air flow when the combined flow measurement is above the target total flow value.

In addition to one or more of the features described above, or as an alternative, further embodiments may include wherein the flow control valve is a single flow control valve and not more than a single flow control valve.

An aircraft is also provided. The aircraft includes an ECS as described above, an ambient air intake connected to the compressor by the first air flow conduit, and a gas turbine engine compressor section connected to turbine by the second air flow conduit. An enclosure is connected to the first air flow conduit and the second air flow conduit. A controller with a single control loop is operatively connected to the flow control valve and configured to (a) receive a target total flow value; (b) receive a combined flow measurement of the first air flow and the second air flow, wherein the first air flow has a higher pressure than the second air flow; (c) compare the combined flow measurement to the target total flow value; and (d) change the first air flow and the second air flow based on the comparison of the combined flow measurement to the target total flow value.

In addition to one or more of the features described above, or as an alternative, further embodiments may include, a flow sensor arranged to measure flow the first air flow and the second air flow to the enclosure. The turbine can have a turbine inlet and a turbine outlet, the turbine inlet being connected to the flow control valve, wherein the turbine outlet is connected to the enclosure. The compressor can have a compressor inlet and a compressor outlet, the compressor inlet being connected to the second air flow conduit, wherein the compressor outlet is connected to the enclosure.

A method of controlling flow through an ECS is additionally provided. The method includes receiving a target total flow value and receiving a combined flow measurement of a first air flow in the first air flow conduit and a second air flow in the second air flow conduit, the first air flow having a higher pressure than the second air flow. The combined flow measurement is compared to the target total flow value, and the first air flow and the second air flow are changed based on the comparison of the combined flow measurement to the target total flow value.

In addition to one or more of the features described above, or as an alternative, further embodiments may include increasing the first air flow and the second air flow when the combined flow measurement is below the target total flow value.

In addition to one or more of the features described above, or as an alternative, further embodiments may include decreasing the first air flow and the second air flow when the combined flow measurement is above the target total flow value.

Technical effects of embodiments of the present disclosure includes the capability to provides an ECS flow to an aircraft cabin using a flow of compressed bleed air and a flow of ambient air. In certain embodiments the bleed air flow and the ambient air flow can both be controlled using a single flow control valve controlling the bleed air flow. In accordance with certain embodiments control of air flow from both the bleed air source and the ambient air source can be controlled using a single control loop, limiting complexity of the ECS and the ECS control scheme.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike:
FIG. 1 is a schematic view of an environmental control system (ECS) constructed in accordance with the present disclosure, showing the ECS receiving a compressed first air flow from a compressor section of a gas turbine engine and an uncompressed second air flow from the ambient environment external to an aircraft;
FIG. 2 is schematic view of the ECS of FIG. 1 according to an embodiment, showing the first air flow powering a compressor to compress the second air flow and a single flow control valve to control flow of both the first air flow and the second air flow through the ECS;
FIG. 3 is a schematic view of a control loop for the ECS of FIG. 1, showing a singular control loop controlling both the first air flow and the second air flow through the ECS; and
FIG. 4 is process flow diagram of a method of controlling flow through an ECS, showing steps of the method according to an embodiment.

### DETAILED DESCRIPTION

A detailed description of one or more embodiments of the disclosed apparatus and method are presented herein by way of exemplification and not limitation with reference to the Figures.

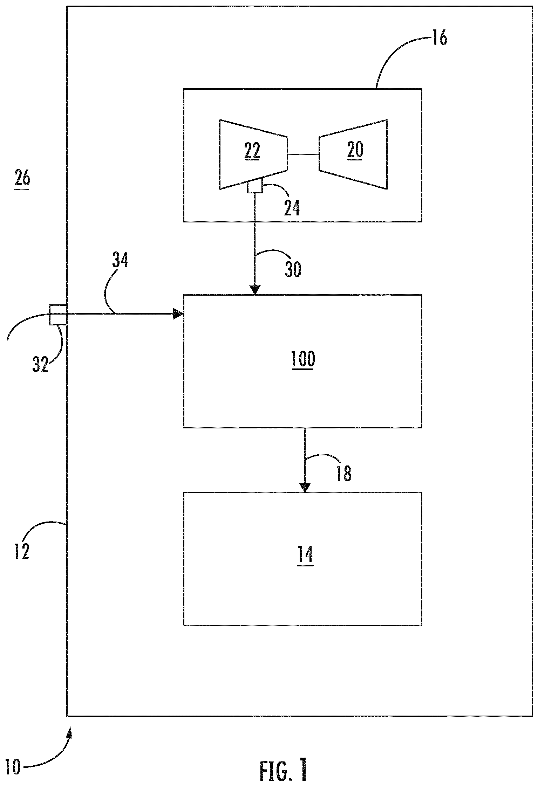

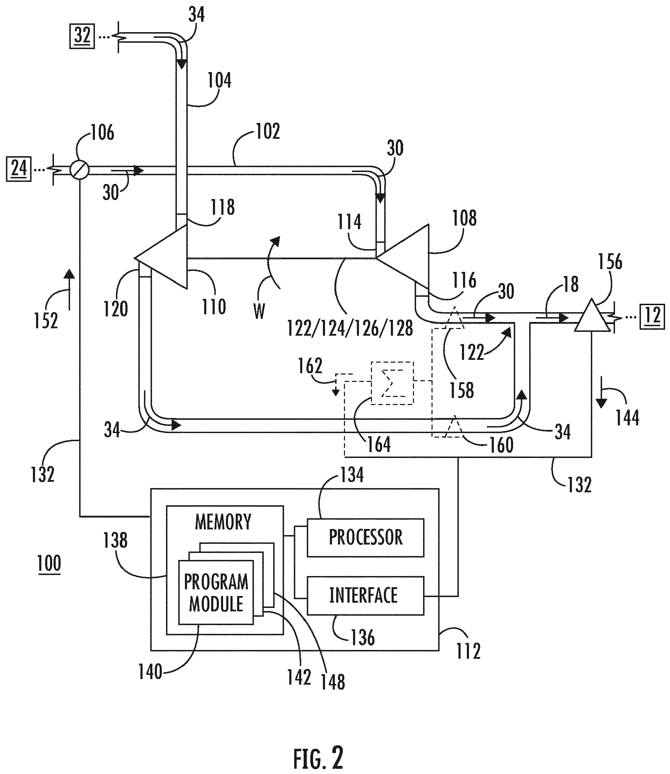

Reference will now be made to the drawings wherein like reference numerals identify similar structural features or aspects of the subject disclosure. For purposes of explanation and illustration, and not limitation, a partial view of an exemplary embodiment of an environmental control system (ECS) in accordance with the disclosure is shown in FIG. 1 and is designated generally by reference character 100. Other embodiments of environmental control systems, aircraft including environmental control systems, and methods of controlling air flow through environmental control systems in accordance with the disclosure, or aspects thereof, are provided in FIGS. 2-4, as will be described. The systems and methods described herein can be used for environmental control systems supplied air from two or more sources, such as with bleed air from a compressor section of a gas turbine engine and uncompressed ambient air provided as a separate flow from the ambient environment, though the present disclosure is not limited systems employing ambient air flows or to environmental control systems for aircraft in general.

Referring to FIG. 1, an aircraft 10 is shown. Aircraft 10 includes an enclosure 12 containing a cabin 14, a gas turbine engine 16, and the ECS 100. The enclosure 12, e.g., the aircraft fuselage, encloses the cabin 14 such that the cabin environment can be maintained to within a predetermined pressure and temperature range. To maintain the predetermined pressure and temperature range the ECS 100 provides an ECS output air flow 18 to the cabin 14. The cabin 14 can enclose, for example, the aircraft flight deck, one or more crew spaces, and/or one or more passenger spaces.

The gas turbine engine 16 includes a turbine section 20, a compressor section 22, and a bleed valve 24. The turbine section 20 is configured to extract work by expanding a working fluid flow provided thereto, a portion of which is provided to the compressor section 22. The compressor section 22 is in turn configured to ingest ambient air from the external environment 26, compress the ingested ambient air to form a compressed gas flow using the work provided by the turbine section 20, and communicate the compressed gas flow to a combustion section to generate the working fluid flow employed by the turbine section 20.

The bleed valve 24 connects the ECS 100 to the compressor section 22 and is configured to provide a portion of the compressed gas flow to the ECS 100 as a first air flow 30. The ECS 100 receives the first air flow 30 and a second air flow 34 from an ambient air intake 32, the first air flow 30 having a first pressure that is greater than a second pressure of the second air flow 34. The ECS 100 combines the first air flow 30 and the second air flow 34 to generate the ECS output air flow 18, which the ECS provides to the enclosure 12. While shown and described herein with the compressor section 22 of the gas turbine engine 16, it is to be understood and appreciated that other sources of pressurized gas can be employed and remain within the scope of the present disclosure, such as ram air, fan air, gas bottles and/or ground cart-mounted compressors, as suitable for an intended application.

With reference to FIG. 2, the ECS 100 is shown. The ECS 100 includes a first air flow conduit 102, a second air flow conduit 104, and a flow control valve 106. The ECS 100 also includes a turbine 108, a compressor 110, and a controller 112. The first air flow conduit 102 is connected to the bleed valve 24 and has arranged along its length the flow control valve 106 and the turbine 108. The flow control valve 106 is arranged between the turbine 108 and the bleed valve 24. More specifically, the flow control valve 106 is arranged between the bleed valve 24 and an inlet 114 of the turbine 108. An outlet 116 of the turbine 108 is connected to the enclosure 12, the bleed valve 24 thereby being in fluid communication with enclosure 12 through the first air flow conduit 102 via the flow control valve 106 and the turbine 108.

The second air flow conduit 104 is connected to the ambient air intake 32 and has arranged along its length the compressor 110. The compressor 110 has an inlet 118 and an outlet 120. The ambient air intake 32 is connected to the outlet 120 of the compressor 110 through the inlet 118 of the compressor 110. The outlet 120 of the compressor 110 is in turn connected to the enclosure 12 (shown in FIG. 1) and connects to the first air flow conduit 102 at a union 122 located between the outlet 116 of the turbine 108 and the enclosure 12. As will be appreciated by those of skill in the art in view of the present disclosure, introducing the second air flow 34 into the first air flow 30 at a location between the outlet 116 of the turbine 108 allows the second air flow 34 and the first air flow 30 to intermix prior to introduction into the enclosure 12, providing uniformity to the ECS output air flow 18 provided to the enclosure 12.

The turbine 108 is configured to extract work W from the first air flow 30 as the first air flow 30 traverses the turbine 108, and is the operatively connected to the compressor 110. Connection of the turbine 108 to the compressor 110 can be, for example, via one or more of a shaft 122, a gear 124, a chain 126, and/or a belt 128, as suitable for an intended application. As will be appreciated by those of skill in the art in view of the present disclosure, operative connection of the turbine 108 to the compressor 110 enables the turbine 108 to power the compressor 110 using work W extracted from the first air flow 30 as the first air flow 30 traverses the turbine 108. This limits the efficiency loss associated with bleeding a portion of the compressed gas flow generated by the compressor section 22 (shown in FIG. 1) of the gas turbine engine 16 (shown in FIG. 1) as the first air flow 30.

The compressor 110 is configured to compress the second air flow 34, e.g., an ambient air flow obtained from the external environment and not compressed by the compressor section 22 (shown in FIG. 1), as the second air flow 34 traverses the compressor 110. More specifically, the compressor 110 compresses the second air flow 34 as it traverses the compressor 110 according to the amount of work W communicated to the compressor 110 by the turbine 108. The amount of work W communicated to the compressor 110 by the turbine 108 in turn depends upon the mass flow rate of first air flow 30 provided to the turbine 108 by the first air flow conduit 102. The actual mass flow rate of first air flow 30 provided to the ECS 100 during operation is in turn controlled by the flow control valve 106.

The flow control valve 106 is configured and adapted for modulating, i.e., increasing or decreasing, the mass flow rate of first air flow 30 according to a flow control valve command signal 152 received from the controller 112. In this respect the flow control valve 106 is operatively associated with the controller 112. Operative association can be, for example, via a communication link 132 connecting the controller 112 to the flow control valve 106. It is contemplated that the communication link 132 can be wired, wireless, analog, and/or digital, as suitable for an intended application.

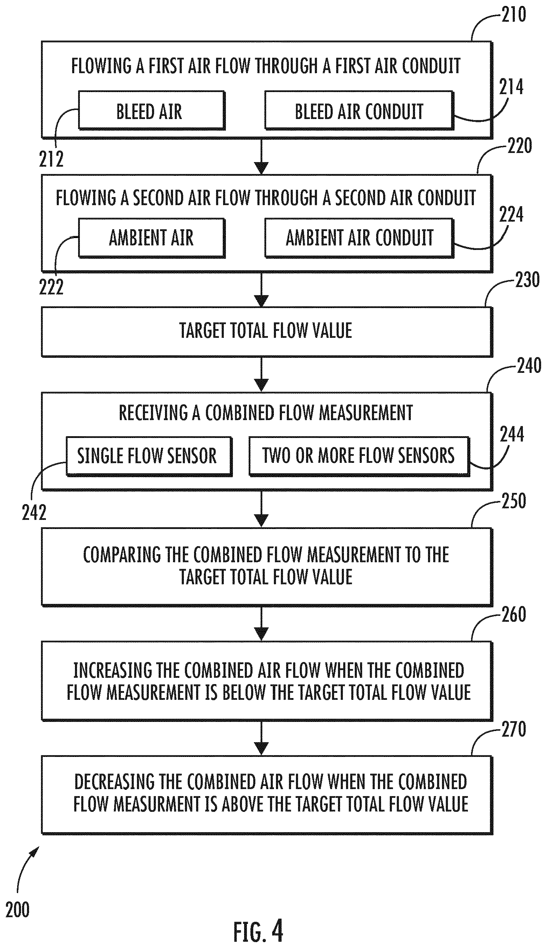

The controller 112 includes a processor 134, a device interface 136, and a memory 138. The memory 138 includes a non-transitory machine-readable medium having a plurality of program modules 140 recorded on the memory 138. The plurality of program modules 140 have instructions that, when read by the processor 134, cause the controller to execute certain operations. Among those operations include the operations of a method 200 (shown in FIG. 4) of controlling air flow through the ECS 100. In the is respect the plurality of program modules 140 implement a control loop 142 for controlling (e.g. regulating) the flow of the first air flow 30 and the second air flow 34 through the first air flow conduit 102 and the second air flow conduit 104. In certain embodiments the control loop 142 is a singular control loop 142, the ECS having no more than the one control loop 142. In accordance with certain embodiments, the memory 138 can have recorded on it a target total flow value 148, which is the desired value of total flow from the ECS 100.

It is contemplated that controller 112 be in communication with one or more flow sensor arranged to provide a signal including a combined flow measurement of air flow from the ECS 100 to the controller 112 representative of the mass flow rate of first air flow 30 and the second air flow 34 through the ECS 100. For example, as shown in solid outline in FIG. 2, a combined flow measurement 144 can be provided by an ECS output flow sensor 156 located between the union 122 and the enclosure 12. Alternatively, as shown in dashed outline in FIG. 2, a combined flow measurement 162 can be provided from a first flow sensor 158 in communication with the first air flow conduit 102 at a location between the union 122 and the bleed valve 24, and a second flow sensor 160 in communication with the second air flow conduit 104 at a location between the ambient air intake 32 and the union 122. Measurements from the first flow sensor 158 and the second flow sensor 160 can be combined, for example, by a summing module 164.

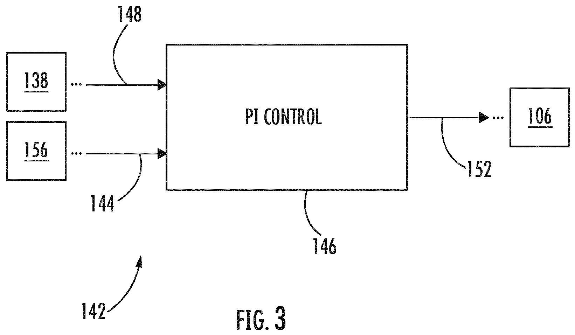

With reference to FIG. 3, the control loop 142 is shown. The control loop 142 includes a control law 146 that receives as input the target total flow value 148 and the combined flow measurement 144, and generates therefrom an output flow control valve command signal 152. It is contemplated that the flow control valve command signal 152 can be generated using the control law 146, which can be a proportional-integral (PI) control law. In certain embodiments the target total flow value 148 be recorded on the memory 138 and received by the control loop 142 from the memory 138. In accordance with certain embodiments the combined flow measurement 144 can be received from the ECS output flow sensor 156. It is also contemplated that a combined flow measurement 162 (shown in FIG. 2) from provided by the first flow sensor 158 and the second flow sensor 160 can be provided to the control loop 142, which can eliminate the need for the an ECS output flow sensor 156.

With reference to FIG. 4, a method 200 of controlling flow through an ECS, e.g., the ECS 100 (shown in FIG. 1), is shown. As shown with box 210, the method 200 includes receiving a first air flow through a first air conduit, e.g., the first air flow 30 (shown in FIG. 1) through the first air flow conduit 102 (shown in FIG. 2). It is contemplated that the first air flow can be a bleed air flow carried by a bleed air conduit, as shown with boxes 212 and 214. As shown with box 220, the method 200 also includes receiving a second air flow through a second air conduit, e.g., the second air flow 34 (shown in FIG. 1) through the second air flow conduit 104 (shown in FIG. 2). It is contemplated that the second air flow can be an ambient air flow carried by an ambient air conduit, as shown with boxes 222 and 224.

A target total flow value is received, e.g., the target total flow value 148 (shown in FIG. 2), as shown with box 230. A combined flow measurement is also received, e.g., the combined flow measurement 144 (shown in FIG. 2) or the combined flow measurement 162 (shown in FIG. 2), as shown with box 240. It is contemplated that the combined flow measurement can be provided by a single flow sensor, e.g., the ECS output flow sensor 156 (shown in FIG. 2), as shown with box 242. It is also contemplated that the combined flow measurement can be provided by two or more flow sensors, e.g., the first flow sensor 158 (shown in FIG. 2) and the second flow sensor 160 (shown in FIG. 2), as shown with box 244.

The combined flow measurement is compared to the target total flow value, as shown with box 250. When the combined flow measurement is below the target total flow value the combined flow through the ECS, e.g., the ECS output air flow 18 (shown in FIG. 2), is increased, as shown with box 260. When the combined flow measurement is above the target total flow value the combined flow through the ECS is decreased, as shown with box 270.

While the above description has described the flow process of FIG. 4 in a particular order, it should be appreciated that unless otherwise specifically required in the attached claims that the ordering of the steps may be varied.

As described above, embodiments, such as the control loop 142, can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An environmental control system (100), comprising:
a first air flow conduit (102) and a second air flow conduit (104);
a turbine (108) in fluid communication with the first air flow conduit (102);
a compressor (110) in fluid communication with the second air flow conduit (104), wherein the compressor is operatively associated with the turbine; and
a flow control valve (106) arranged along the first air flow conduit (102) to control a second air flow in the second air flow conduit (104) according to a first air flow in the first air flow conduit (102).

2. The environmental control system are recited in claim 1, wherein the second air flow conduit is connected to an ambient air intake carried by an aircraft, or wherein the first air flow conduit is connected to bleed valve of a gas turbine engine compressor section.

3. The environmental control system as recited in claim 1 or 2, wherein the compressor has a compressor inlet and a compressor outlet, wherein the compressor inlet is connected to the second air flow conduit.

4. The environmental control system as recited in any preceding claim, wherein the turbine has a turbine inlet and a turbine outlet, wherein the turbine inlet is connected to the flow control valve, and optionally further comprising a shaft, a gear, a belt or a chain operatively connecting the turbine to the compressor.

5. The environmental control system as recited in any preceding claim, further comprising a union connecting the second air flow conduit to the first air flow conduit.

6. The environmental control system as recited in any preceding claim, further comprising an enclosure connected to the environmental control system, wherein the enclosure comprises an aircraft cabin.

7. The environmental control system as recited in any preceding claim, further comprising at least one flow sensor arranged to provide a combined flow measurement of total flow from the first air flow conduit and the second air flow conduit.

8. The environmental control system as recited in any preceding claim, further comprising a single control loop and not more than one single control loop operatively connected to the flow control valve, or further comprising a proportional-integral control loop operatively connected to the flow control valve.

9. The environmental control system as recited in any preceding claim, further comprising a controller operatively connected to the flow control valve and configured to:
receive a target total flow value;
receive a combined flow measurement of both the first air flow and the second air flow;
compare the combined flow measurement to the target total flow value; and
change the second air flow and the first air flow based on the comparison of the combined air flow air flow to the target total flow value.

10. The environmental control system as recited in claim 10, wherein the controller is configured to increase the first air flow and the second air flow when the combined flow measurement is below the target total flow value, and/or wherein the controller is configured to decrease the second air flow and the first air flow when the combined flow measurement is above the target total flow value.

11. The environmental control system as recited in any preceding claim, wherein the flow control valve is a single flow control valve and not more than a single flow control valve.

12. An aircraft, comprising:
an environmental control system as recited in any preceding claim;
an ambient air intake connected to the compressor by the first air flow conduit;
a gas turbine engine compressor section connected to turbine by the second air flow conduit;
an enclosure connected to the first air flow conduit and the second air flow conduit; and
a controller with a single control loop operatively connected to the flow control valve and configured to:
receive a target total flow value;
receive a combined flow measurement of the first air flow and the second air flow, wherein the first air flow has a higher pressure than the second air flow;
compare the combined flow measurement to the target total flow value; and
change the first air flow and the second air flow based on the comparison of the combined flow measurement to the target total flow value.

13. The aircraft as recited in claim 12, further comprising:
a flow sensor arranged to measure flow the first air flow and the second air flow to the enclosure;
wherein the turbine has a turbine inlet and a turbine outlet, wherein the turbine inlet is connected to the flow control valve, wherein the turbine outlet is connected to the enclosure; and
wherein the compressor has a compressor inlet and a compressor outlet, wherein the compressor inlet is connected to the second air flow conduit, wherein the compressor outlet is connected to the enclosure.

14. A method controlling flow through an environmental control system, the method comprising:
at an environmental control system comprising a first air flow conduit and an second air flow conduit, a turbine in fluid communication with the first air flow conduit, a compressor in fluid communication with the second air flow conduit and operatively associated with the turbine, and a flow control valve arranged along the first air flow conduit;
receiving a target total flow value;
receiving a combined flow measurement of a first air flow in the first air flow conduit and a second air flow in the second air flow conduit, wherein the first air flow has a higher pressure than the second air flow;
comparing the combined flow measurement to the target total flow value; and
changing the first air flow and the second air flow based on the comparison of the combined flow measurement to the target total flow value.

15. The method as recited in claim 18, further comprising increasing the first air flow and the second air flow when the combined flow measurement is below the target total flow value, or further comprising decreasing the first air flow and the second air flow when the combined flow measurement is above the target total flow value.
